# FASCICULE DE BREVET EUROPEEN

(11) **EP 4 209 299 B1**
(45) Date de publication et mention de la délivrance du brevet: **11.03.2026**
(21) Numéro de dépôt: 22209522.6
(22) Date de dépôt: 25.11.2022
(51) Int. Cl.: B23K 20/12, B23K 33/00, F17C 1/00, B23K 101/04, B23K 101/12

(54) **RÉSERVOIR COMPRENANT AU MOINS DEUX PARTIES RELIÉES PAR UNE COURONNE DE JONCTION ET DES SOUDURES OBTENUES PAR UN PROCÉDÉ DE SOUDAGE PAR FRICTION ET PROCÉDÉ DE FABRICATION DUDIT RÉSERVOIR**
BEHÄLTER MIT MINDESTENS ZWEI DURCH EINEN VERBINDUNGSRING VERBUNDENEN TEILEN UND DURCH EIN REIBSCHWEISSVERFAHREN ERHALTENEN SCHWEISSNÄHTEN UND VERFAHREN ZUR HERSTELLUNG DES TANKS
TANK COMPRISING AT LEAST TWO PARTS CONNECTED BY A JOINING RING AND WELDS OBTAINED BY A FRICTION WELDING METHOD AND MANUFACTURING METHOD OF SAID TANK

(30) Priorité: 02.12.2021 FR 2112842
(43) Date de publication de la demande: 12.07.2023
(73) Titulaire: AIRBUS OPERATIONS (S.A.S.), 31060 Toulouse (FR)
(72) Inventeur: PENVEN, Benoît, TOULOUSE (FR); COSTAGLIOLA, Laurent, 31060 TOULOUSE (FR); WALCH, Hermann, 31060 TOULOUSE (FR)
(74) Mandataire: Fantin, Laurent

(56) Documents cités:
- WO-A1-2009/117246
- US-A1- 2008 274 383

## Description

La présente demande se rapporte à un réservoir comprenant au moins deux parties reliées par une couronne de jonction et des soudures obtenues par un procédé de soudage par friction ainsi qu'à un procédé de fabrication dudit réservoir.

Selon un mode de réalisation visible sur la figure 1, décrit dans les documents US2008/274383 (formant la base du préambule des revendications indépendantes) et WO2009/117246, un réservoir 10 comprend un corps tubulaire 12 ainsi que des premier et deuxième dômes 14, 16 reliés aux extrémités du corps tubulaire 12. Selon une configuration, le corps tubulaire 12 comprend deux demi-cylindres 12.1, 12.2 reliés par un procédé de soudage par fusion ou friction. En suivant, le premier dôme 14 est relié au corps tubulaire 12 par un procédé de soudage par fusion ou friction. Enfin, le deuxième dôme 16 est relié au corps tubulaire 12 par un procédé de soudage par fusion.

Lorsque le réservoir est utilisé en tant que réservoir cryogénique pour stocker de l'hydrogène, il est impératif que les soudures réalisées pour assembler les différentes parties du réservoir 10 soient parfaitement étanches et résistantes. Le procédé de soudage par friction est préféré par rapport aux autres procédés de soudage car il offre de meilleures caractéristiques mécaniques, une plus grande stabilité et une vitesse de réalisation plus élevée.

Ce procédé de soudage utilise une tête de soudage rotative appliquée contre les premières faces des pièces à assembler et déplacée le long de la zone de jonction desdites pièces, une contre-plaque étant positionnée contre les deuxièmes faces (opposées aux premières faces) des pièces à assembler pour assurer la reprise des efforts générés par la tête de soudage.

Les demi-cylindres 12.1, 12.2 du corps tubulaire 12 et le premier dôme 14 peuvent être assemblés en utilisant un procédé de soudage par friction. En revanche, le deuxième dôme 16 ne peut pas être assemblé par un procédé de soudage par friction car il n'est pas possible de positionner une contre-plaque à l'intérieur du réservoir pour reprendre les efforts générés par la tête de soudage, cette contre-plaque ne pouvant pas être retirée du réservoir fermé à l'issue de l'opération de soudage.

La présente invention vise à remédier à tout ou partie des inconvénients de l'art antérieur.

A cet effet, l'invention a pour objet un réservoir comprenant au moins des première et deuxième parties reliées entre elles de manière à obtenir un réservoir fermé délimitant des zones intérieure et extérieure, chacune desdites première et deuxième parties présentant une extrémité.

Selon l'invention, le réservoir comprend une couronne de jonction intercalée entre les première et deuxième parties et reliée à l'extrémité de la première partie par une première soudure périphérique obtenue par un procédé de soudage par friction et à l'extrémité de la deuxième partie par une deuxième soudure périphérique obtenue par un procédé de soudage par friction, la couronne de jonction comprenant au moins un premier tronçon cylindrique emmanché dans l'extrémité de la première partie, au moins un premier épaulement positionné approximativement dans un plan transversal, attenant au premier tronçon cylindrique et en saillie vers la zone extérieure du réservoir par rapport au premier tronçon cylindrique ainsi qu'au moins une première âme transversale en forme d'anneau comportant un bord extérieur relié au premier tronçon cylindrique et un bord intérieur orienté vers la zone intérieure du réservoir, ladite première âme transversale étant positionnée approximativement dans le même plan transversal que le premier épaulement, la première soudure périphérique étant positionnée au niveau d'un plan de jonction situé entre le premier épaulement et l'extrémité de la première partie et les reliant.

Selon l'invention, toutes les parties du réservoir peuvent être reliées par des soudures obtenues par un procédé de soudage par friction, le premier tronçon cylindrique et l'âme transversale assurant la reprise des efforts générés par la tête de soudage par friction lors de la fermeture du réservoir.

Selon une autre caractéristique, chaque épaulement présente une hauteur égale à l'épaisseur de l'extrémité de la partie emmanchée sur le tronçon cylindrique attenant à l'épaulement. Selon un premier mode de réalisation, la couronne de jonction comprend un deuxième tronçon cylindrique présentant une extrémité libre reliée bout à bout à la deuxième partie par la deuxième soudure périphérique.

Selon une autre caractéristique, la couronne de jonction comprend un tronçon tubulaire interne coaxial au premier tronçon cylindrique et relié au bord intérieur de la première âme transversale.

Selon une autre caractéristique, le deuxième tronçon cylindrique présente une longueur supérieure à celle du premier tronçon cylindrique.

Selon une autre caractéristique, le deuxième tronçon cylindrique présente une épaisseur qui augmente de l'extrémité libre jusqu'à la première âme transversale.

Selon un deuxième mode de réalisation, la couronne de jonction comprend un deuxième tronçon cylindrique emmanché dans l'extrémité de la deuxième partie, un deuxième épaulement positionné approximativement dans un plan transversal, attenant au deuxième tronçon cylindrique et en saillie vers la zone extérieure du réservoir par rapport au deuxième tronçon cylindrique ainsi qu'une deuxième âme transversale en forme d'anneau comportant un bord extérieur relié au deuxième tronçon cylindrique et un bord intérieur orienté vers la zone intérieure du réservoir, ladite deuxième âme transversale étant positionnée approximativement dans le même plan transversal que le deuxième épaulement, la deuxième soudure périphérique étant positionnée au niveau d'un plan de jonction situé entre le deuxième épaulement et l'extrémité de la deuxième partie et les reliant.

Selon une autre caractéristique, la couronne de jonction comprend un tronçon tubulaire interne coaxial aux premier et deuxième tronçons cylindriques et reliant les bords intérieurs des première et deuxième âmes transversales.

L'invention a également pour objet un procédé de fabrication d'un réservoir selon l'une des caractéristiques précédentes, ledit réservoir comprenant au moins des première et deuxième parties reliées entre elles de manière à obtenir un réservoir fermé délimitant des zones intérieure et extérieure, chacune desdites première et deuxième parties présentant une extrémité.

Selon l'invention, le procédé de fabrication comprend une première étape de positionnement d'une couronne de jonction par rapport à l'extrémité de la deuxième partie, ladite couronne de jonction comprenant au moins un premier tronçon cylindrique configuré pour être emmanché dans l'extrémité de la première partie, au moins un premier épaulement positionné approximativement dans un plan transversal, attenant au premier tronçon cylindrique et en saillie vers la zone extérieure du réservoir par rapport au premier tronçon cylindrique ainsi qu'au moins une première âme transversale en forme d'anneau comportant un bord extérieur relié au premier tronçon cylindrique et un bord intérieur orienté vers la zone intérieure du réservoir, ladite première âme transversale étant positionnée approximativement dans le même plan transversal que le premier épaulement. En complément, le procédé comprend une première étape de soudage par friction pour relier la couronne de jonction et la deuxième partie, une deuxième étape de positionnement du premier tronçon cylindrique emmanché dans l'extrémité de la première partie jusqu'à ce que ladite extrémité de la première partie vienne en butée contre le premier épaulement ainsi qu'une deuxième étape de soudage par friction pour relier la couronne de jonction et la première partie.

Selon un premier mode opératoire, la couronne de jonction comprend un deuxième tronçon cylindrique présentant une extrémité libre configurée pour être positionnée bout à bout avec l'extrémité de la deuxième partie. En complément, la première étape de positionnement consiste à positionner bout à bout l'extrémité libre du deuxième tronçon cylindrique et l'extrémité de la deuxième partie, le procédé comprenant une étape de mise en place d'une contre-plaque pour assurer la reprise des efforts générés lors de la première étape de soudage par friction ainsi qu'une étape de retrait de la contre-plaque après la réalisation de la première étape de soudage par friction et avant la deuxième étape de positionnement.

Selon un deuxième mode opératoire, la couronne de jonction comprend un deuxième tronçon cylindrique configuré pour être emmanché dans l'extrémité de la deuxième partie, un deuxième épaulement positionné approximativement dans un plan transversal, attenant au deuxième tronçon cylindrique et en saillie vers la zone extérieure du réservoir par rapport au deuxième tronçon cylindrique ainsi qu'une deuxième âme transversale en forme d'anneau comportant un bord extérieur relié au deuxième tronçon cylindrique et un bord intérieur orienté vers la zone intérieure du réservoir, ladite deuxième âme transversale étant positionnée approximativement dans le même plan transversal que le deuxième épaulement. En complément, la première étape de positionnement consiste à emmancher l'extrémité de la deuxième partie sur le deuxième tronçon cylindrique jusqu'à ce que ladite extrémité de la deuxième partie vienne en butée contre le deuxième épaulement.

L'invention a également pour objet un procédé de maintenance ou de réparation d'un réservoir, caractérisé en ce qu'il comprend une étape de désolidarisation de la couronne de jonction de la première et/ou deuxième partie.

Selon une autre caractéristique, la couronne de jonction étant désolidarisée des première et deuxième parties, le procédé de maintenance ou de réparation comprend une étape de remontage du réservoir en reliant les première et deuxième parties avec une nouvelle couronne de jonction.

D'autres caractéristiques et avantages ressortiront de la description de l'invention qui va suivre, description donnée à titre d'exemple uniquement, en regard des dessins annexés parmi lesquels :
- La figure 1 est une représentation schématique des différentes étapes de fabrication d'un réservoir illustrant un mode de réalisation de l'art antérieur,
- La figure 2 est une représentation schématique des différentes étapes de fabrication d'un réservoir illustrant un mode de réalisation de l'invention,
- La figure 3 est une vue en perspective d'une couronne de jonction d'un réservoir illustrant un premier mode de réalisation de l'invention,
- La figure 4 est une section de la couronne de jonction visible sur la figure 3,
- La figure 5 est une coupe longitudinale d'une partie d'un réservoir illustrant des étapes de soudage de la couronne de jonction visible sur la figure 4,
- La figure 6 est une coupe longitudinale d'une partie d'un réservoir illustrant un mode de réalisation de l'invention,
- La figure 7 est une coupe longitudinale de la partie du réservoir visible sur la figure 6 illustrant une étape de désassemblage du réservoir,
- La figure 8 est une coupe longitudinale de la partie du réservoir visible sur la figure 7 illustrant une étape d'assemblage du réservoir,
- La figure 9 est une coupe d'une couronne de jonction illustrant un autre mode de réalisation de l'invention, et
- La figure 10 est une coupe longitudinale d'une partie d'un réservoir illustrant des étapes de soudage de la couronne de jonction visible sur la figure 9.

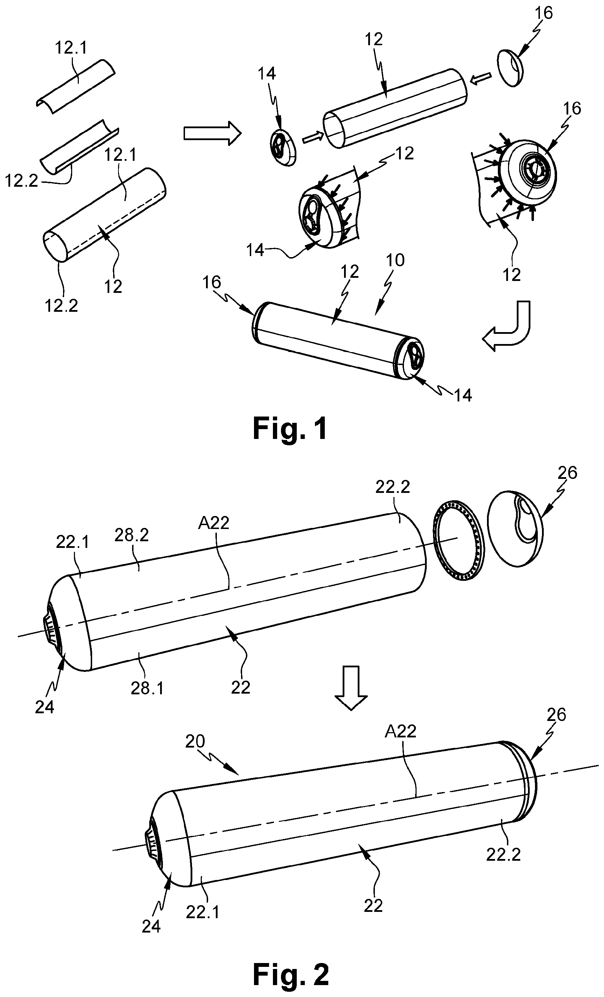

Selon un mode de réalisation visible sur la figure 2, un réservoir 20 cylindrique comprend un corps tubulaire 22 cylindrique qui s'étend entre des première et deuxième extrémités 22.1, 22.2, une première paroi d'extrémité 24 reliée de manière étanche à la première extrémité 22.1 ainsi qu'une deuxième paroi d'extrémité 26 reliée de manière étanche à la deuxième extrémité 22.2. Lorsqu'il est fermé, le réservoir délimite une zone intérieure Zi et une zone extérieure Ze.

Le corps tubulaire 22 présente un axe de révolution A22. Pour la suite de la description, une direction longitudinale est parallèle à l'axe de révolution A22. Un plan longitudinal passe par l'axe de révolution A22. Un plan transversal est un plan perpendiculaire à l'axe de révolution A22.

Selon une configuration, le corps tubulaire 22 comprend deux demi-cylindres 28.1, 28.2 reliés entre eux de manière étanche pour obtenir le corps tubulaire 22. Selon un mode opératoire les deux demi-cylindres 28.1, 28.2 sont reliés par soudage par friction.

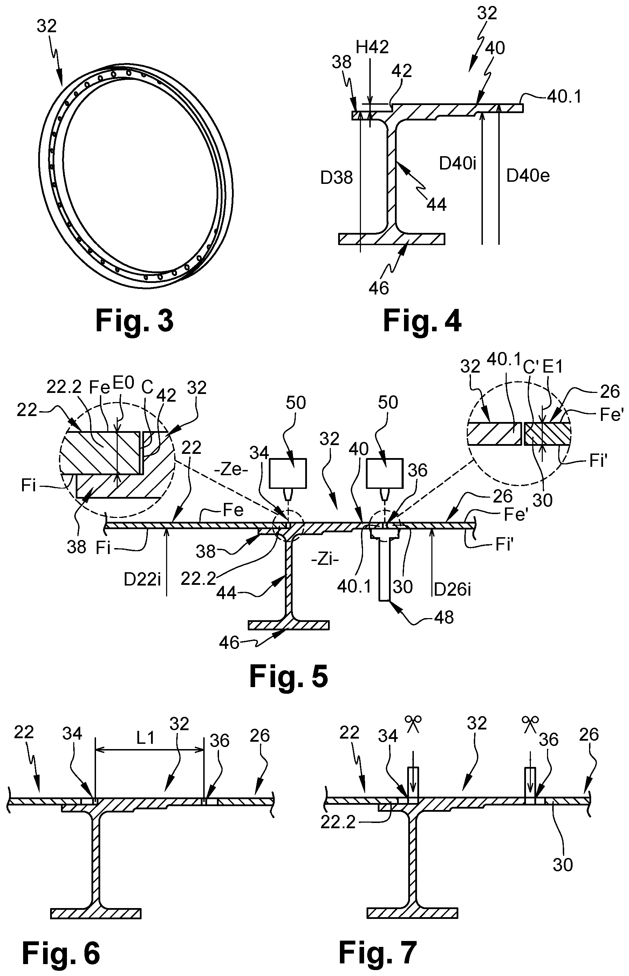

Comme illustré sur la figure 5, chacune des première et deuxième extrémités 22.1, 22.2 comprend un chant C circulaire, positionné dans un plan transversal, ainsi que des faces interne et externe Fi, Fe cylindriques et coaxiales à l'axe de révolution A22. La face interne Fi présente un diamètre intérieur D22i, visible sur la figure 5. Le corps tubulaire 22 présente, au niveau de chacune de ses première et deuxième extrémités 22.1, 22.2, une épaisseur E0 constante sur toute sa circonférence.

Selon une configuration, les première et deuxième parois d'extrémité 24, 26 présentent chacune une forme en dôme. Bien entendu, l'invention n'est pas limitée à cette géométrie pour les première et deuxième parois d'extrémité 24, 26. Quel que soit le mode de réalisation, chacune des première et deuxième parois d'extrémité 24, 26 présente une extrémité 30 qui comprend un chant C' circulaire, positionné dans un plan transversal, ainsi que des faces interne et externe Fi', Fe'. Chacune des première et deuxième parois d'extrémité 24, 26 présente une extrémité 30 ayant une épaisseur E1 constante sur toute sa circonférence et sensiblement égale à l'épaisseur E0 du corps tubulaire 22. Au niveau de l'extrémité 30, la face interne Fi' présente un diamètre intérieur D26i sensiblement égal à celui de la face interne Fi du corps tubulaire 22.

La première paroi d'extrémité 24 et le corps tubulaire 22 sont reliés par un procédé de soudage par friction.

Le corps tubulaire 22, les première et deuxième parois d'extrémité 24, 26 ainsi que le mode d'assemblage du corps tubulaire 22 et de la première paroi d'extrémité 24 ne sont pas plus décrits car ils peuvent être identiques à ceux de l'art antérieur.

Le réservoir 20 comprend une couronne de jonction 32 intercalée entre le corps tubulaire 22 et la deuxième paroi d'extrémité 26, ladite couronne de jonction 32 étant reliée au corps tubulaire 22 par une première soudure périphérique 34 obtenue par un procédé de soudage par friction ainsi qu'à la deuxième paroi d'extrémité 26 par une deuxième soudure périphérique 36 obtenue par un procédé de soudage par friction.

La couronne de jonction 32 comprend :
- un premier tronçon cylindrique 38 configuré pour s'emmancher dans la deuxième extrémité 22.2 du corps tubulaire 22,
- un deuxième tronçon cylindrique 40 destiné à être positionné dans le prolongement de l'extrémité 30 de la deuxième paroi d'extrémité 26, ledit deuxième tronçon cylindrique 40 présentant une extrémité libre 40.1 orientée vers la deuxième paroi d'extrémité 26,
- un épaulement 42 positionné approximativement dans un plan transversal, en saillie vers la zone extérieure du réservoir 20 par rapport au premier tronçon cylindrique 38, ledit épaulement 42 étant attenant au premier tronçon cylindrique 38,
- une âme transversale 44 en forme d'anneau comportant un bord extérieur relié au premier tronçon cylindrique 38 et un bord intérieur orienté vers la zone intérieure du réservoir, ladite âme transversale 44 étant située approximativement dans le même plan transversal que l'épaulement 42.

Selon ce mode de réalisation, la couronne de jonction 42 présente une section proche d'un T. Le premier tronçon cylindrique 38 présente un diamètre extérieur D38 sensiblement égal au diamètre intérieur D22i du corps tubulaire 22. L'épaulement 42 présente une hauteur H42 sensiblement égale à l'épaisseur E0 du corps tubulaire 22. Le deuxième tronçon cylindrique 40 comporte une face extérieure affleurant les faces externes Fe, Fe' du corps tubulaire 22 et de la deuxième paroi d'extrémité 26.

Le premier tronçon cylindrique 38 et l'âme transversale 44 permettent d'assurer la reprise des efforts générés par une tête de soudage par friction 50 lors de la réalisation de la première soudure périphérique 34.

Selon un mode de réalisation visible sur la figure 4, le deuxième tronçon cylindrique 40 présente une longueur (dimension prise selon la direction longitudinale) supérieure à celle du premier tronçon cylindrique 38. Le deuxième tronçon cylindrique 40 présente un diamètre extérieur D40e sensiblement constant sur toute sa longueur ainsi qu'un diamètre intérieur D40i qui diminue, notamment par paliers, de l'extrémité libre 40.1 jusqu'à l'âme transversale 44, notamment par paliers. Ainsi, le deuxième tronçon cylindrique 40 présente une épaisseur qui augmente de l'extrémité libre 40.1 jusqu'à l'âme transversale 44.

Pour augmenter sa résistance, la couronne de jonction 32 comprend un tronçon tubulaire interne 46 coaxial au premier tronçon cylindrique 38 et relié au bord intérieur de l'âme transversale 44. Ainsi, la couronne de jonction 32 présente une section proche d'un l.

Selon un mode opératoire visible sur la figure 5, le procédé de fabrication comprend une première étape de positionnement du deuxième tronçon cylindrique 40 de la couronne de jonction 32 dans le prolongement de l'extrémité 30 de la deuxième paroi d'extrémité 26 ainsi qu'une étape de mise en place d'une contre-plaque 48 contre les faces internes du deuxième tronçon cylindrique 40 et de la deuxième paroi d'extrémité 26. Ainsi, l'extrémité libre 40.1 du deuxième tronçon cylindrique 40 de la couronne de jonction 32 est positionnée face au chant C' de l'extrémité 30 de la deuxième paroi d'extrémité 26, contre ou très faiblement espacée dudit chant C'.

Le procédé de fabrication comprend une étape de réalisation de la deuxième soudure périphérique 36 en utilisant une tête de soudage par friction 50. Cette deuxième soudure périphérique 36 est réalisée au niveau du plan de jonction de l'extrémité libre 40.1 du deuxième tronçon cylindrique 40 de la couronne de jonction 32 et du chant C' de l'extrémité 30 de la deuxième paroi d'extrémité 26 pour relier la deuxième paroi d'extrémité 26 et la couronne de jonction 32.

Le procédé de fabrication comprend une étape de retrait de la contre-plaque 48. Cette dernière étant disjointe du réservoir 20, elle peut en être retirée car ce dernier n'est pas encore totalement fermé.

Le procédé de fabrication comprend une deuxième étape de positionnement du premier tronçon cylindrique 38 de la couronne de jonction 32 emmanché dans la deuxième extrémité 22.2 du corps tubulaire 22 jusqu'à ce que la deuxième extrémité 22.2 vienne en butée contre l'épaulement 42. Après cette étape de positionnement, l'épaulement 42 de la couronne de jonction 32 est positionné face au chant C de la deuxième extrémité 22.2 du corps tubulaire 22, contre ou très faiblement espacé dudit chant C.

En suivant, le procédé de fabrication comprend une étape de réalisation de la première soudure périphérique 34 en utilisant une tête de soudage par friction 50. Cette première soudure périphérique 34 est réalisée au niveau du plan de jonction de l'épaulement 42 de la couronne de jonction 32 et du chant C de la deuxième extrémité 22.2 du corps tubulaire 22 pour relier le corps tubulaire 22 et la couronne de jonction 32. Lors de cette étape, le premier tronçon cylindrique 38 et l'âme transversale 44 assurent la reprise des efforts générés par la tête de soudage par friction 50. Après cette étape de soudage, le réservoir 20 est fermé, toutes les soudures utilisées pour relier les différentes parties du réservoir ayant été réalisées par soudage par friction.

Selon un autre mode de réalisation, la couronne de jonction 32 est reliée dans un premier temps au corps tubulaire 22 puis dans un deuxième temps à la deuxième paroi d'extrémité 26. Selon cet autre mode de réalisation, la couronne de jonction 32 présente un premier tronçon cylindrique 38 configuré pour s'emmancher dans l'extrémité 30 de la deuxième paroi d'extrémité 26, un deuxième tronçon cylindrique 40 destiné à être positionné dans le prolongement de la deuxième extrémité 22.2 du corps tubulaire 22, un épaulement 42 positionné approximativement dans un plan transversal, en saillie vers l'extérieur du réservoir 20 par rapport au premier tronçon cylindrique 38 ainsi qu'une âme transversale 44 positionnée approximativement dans le même plan transversal que l'épaulement 42.

Selon un avantage procuré par l'invention, lorsqu'il est nécessaire d'avoir accès à l'intérieur du réservoir 20 pour une opération de réparation ou de maintenance par exemple, ce dernier peut être démonté en désolidarisant la couronne de jonction 32 du corps tubulaire 22 et de la deuxième paroi d'extrémité 26.

Comme illustré sur la figure 6, les première et deuxième soudures périphériques 34, 36 sont initialement séparées d'une première distance L1.

Selon un mode opératoire visible sur la figure 7, pour désolidariser la couronne de jonction 32, le procédé de désolidarisation comprend une étape de découpe des première et deuxième soudures périphériques 34, 36, par usinage par exemple.

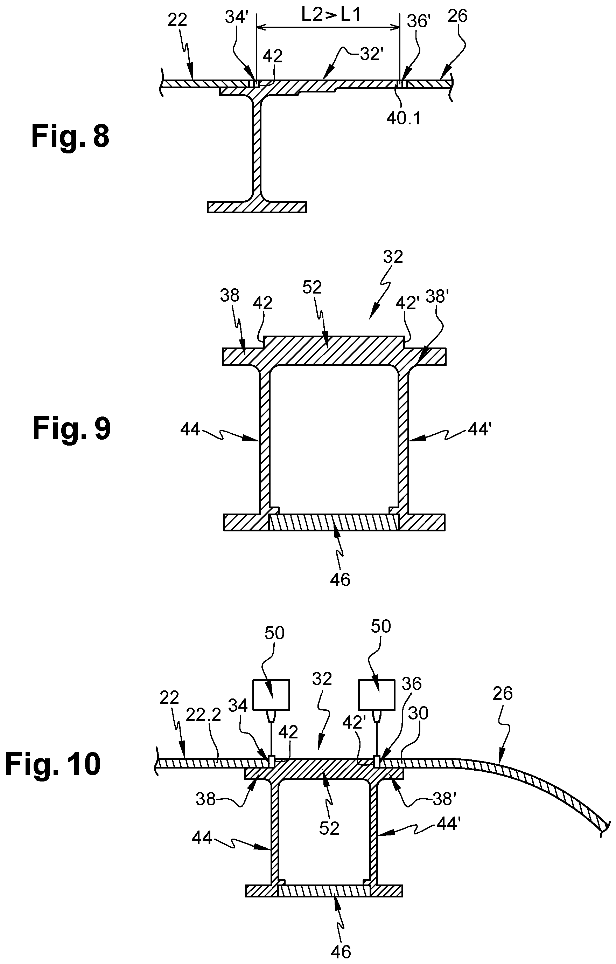

Pour remonter le réservoir, les extrémités 22.2, 30 du corps tubulaire 22 et de la deuxième paroi d'extrémité 26 sont usinées. Le corps tubulaire 22 et la deuxième paroi d'extrémité 26 sont donc raccourcis. En suivant, le corps tubulaire 22 et la deuxième paroi d'extrémité 26 sont reliés par des première et deuxième soudures périphériques 34', 36' à une nouvelle couronne de jonction 32' qui présente un épaulement 42 et une extrémité libre 40.1 séparés d'une deuxième distance L2 supérieure à la première distance L1, comme illustré sur la figure 8, afin de compenser la perte de matière au niveau des extrémités 22.2, 30 du corps tubulaire 22 et de la deuxième paroi d'extrémité 26. Ainsi, le réservoir 20 a toujours la même contenance.

Selon un autre mode de réalisation visible sur la figure 9 et 10, la couronne de jonction 32 comprend :
- un premier tronçon cylindrique 38 configuré pour s'emmancher dans la deuxième extrémité 22.2 du corps tubulaire 22,
- un deuxième tronçon cylindrique 38' configuré pour s'emmancher dans l'extrémité 30 de la deuxième paroi d'extrémité 26,
- un tronçon intermédiaire cylindrique 52 reliant les premier et deuxième tronçons cylindriques 38, 38',
- un premier épaulement 42 positionné approximativement dans un plan transversal, attenant au premier tronçon cylindrique 38, en saille vers la zone extérieure du réservoir 20 par rapport au premier tronçon cylindrique 38 et séparant le premier tronçon cylindrique 38 et le tronçon intermédiaire cylindrique 52,
- un deuxième épaulement 42' positionné approximativement dans un plan transversal, attenant au deuxième tronçon cylindrique 38', en saillie vers la zone extérieure du réservoir 20 par rapport au deuxième tronçon cylindrique 38' et séparant le deuxième tronçon cylindrique 38' et le tronçon intermédiaire cylindrique 52,
- une première âme transversale 44 en forme d'anneau comportant un bord extérieur relié au premier tronçon cylindrique et un bord intérieur orienté vers la zone intérieure du réservoir 20, ladite première âme transversale 44 étant positionnée approximativement dans le même plan transversal que le premier épaulement 42,
- une deuxième âme transversale 44' en forme d'anneau comportant un bord extérieur relié au deuxième tronçon cylindrique 38' et un bord intérieur orienté vers la zone intérieure du réservoir 20, ladite deuxième âme transversale étant positionnée approximativement dans le même plan transversal que le deuxième épaulement 42'.

Selon ce mode de réalisation visible sur les figures 9, 10, il n'est pas nécessaire d'utiliser une contre-plaque pour réaliser les première et deuxième soudures périphériques 34, 36. Le premier tronçon cylindrique 38 et la première âme transversale 44 assurent la reprise des efforts générés par la tête de soudage par friction 50 lors de la réalisation de la première soudure périphérique 34. Le deuxième tronçon cylindrique 38' et la deuxième âme transversale 44' assurent la reprise des efforts générés par la tête de soudage par friction 50 lors de la réalisation de la deuxième soudure périphérique 36.

Selon une configuration, pour augmenter sa résistance, la couronne de jonction 32 comprend un tronçon tubulaire interne 46 coaxial aux premier et deuxième tronçons cylindriques 38, 38' et reliant les bords intérieurs des première et deuxième âmes transversales 44, 44'. Ce tronçon tubulaire interne 46 peut être intégré au reste de la couronne de jonction 32 ou une partie de ce tronçon tubulaire interne 46, par exemple celle située entre les deux âmes transversales, peut être rapportée et reliée par tout moyen approprié au reste de la couronne de jonction 32.

Bien entendu, l'invention n'est pas limitée aux modes de réalisation décrits précédemment. Ainsi, la couronne de jonction 32 peut être intercalée entre la première paroi d'extrémité 24 et le corps tubulaire 22 et les relier. En variante, le corps tubulaire 22 peut comprendre plusieurs tronçons et la couronne de jonction 32 peut être intercalée entre deux tronçons du corps tubulaire 22 et les relier.

Quel que soit le mode de réalisation, le réservoir 20 comprend au moins des première et deuxième parties présentant chacune une extrémité, une couronne de jonction 32 reliée à l'extrémité de la première partie par une première soudure périphérique 34 et à l'extrémité de la deuxième partie par une deuxième soudure périphérique 36. La couronne de jonction 32 comprend au moins un premier tronçon cylindrique 38 emmanché dans l'extrémité de la première partie, au moins un premier épaulement 42 en saillie vers la zone extérieure du réservoir 20 par rapport au premier tronçon cylindrique 38 et attenant au premier tronçon cylindrique 38, ainsi qu'au moins une âme transversale 44 en forme d'anneau comportant un bord extérieur relié au premier tronçon cylindrique 38 et un bord intérieur orienté vers la zone intérieure du réservoir, ladite première âme transversale étant positionnée approximativement dans le même plan transversal que l'épaulement 42, la première soudure périphérique 34 étant positionnée au niveau d'un plan de jonction situé entre l'épaulement 42 et l'extrémité de la première partie et les reliant. Ainsi, les première et deuxième soudures périphériques 34, 36 sont réalisées par soudage par friction.

Chaque épaulement 42, 42' présente une hauteur égale à l'épaisseur de l'extrémité de la partie emmanchée sur le tronçon cylindrique 38, 38' attenant à l'épaulement 42, 42' pour permettre un soudage par friction.

Selon un premier mode de réalisation, la couronne de jonction 32 comprend un tronçon cylindrique 40 présentant une extrémité libre 40.1 reliée bout à bout à la deuxième partie par la deuxième soudure périphérique 36. Selon ce mode de réalisation, la deuxième soudure périphérique 36 est réalisée en premier en utilisant une contre-plaque 48 pour reprendre les efforts générés par la tête de soudage par friction 50 puis la première soudure périphérique 34 est réalisée après avoir retiré la contre-plaque 48, le premier tronçon cylindrique 38 et la première âme transversale 44 assurant la reprise des efforts générés par la tête de soudage par friction 50.

Selon un deuxième mode de réalisation, la couronne de jonction 32 comprend deux tronçons cylindriques 38, 38' destinés à s'emmancher dans les extrémités des deux parties du réservoir à relier ainsi que deux âmes transversales 44, 44'. Selon ce mode de réalisation, l'ordre de réalisation des première et deuxième soudures périphériques n'a pas d'importance. Pour chacune d'elles, il n'est pas nécessaire de prévoir une contre-plaque, le tronçon cylindrique emmanchée et l'âme transversale correspondante assurant la reprise des efforts générés par la tête de soudage par friction 50.

L'invention permet de simplifier la maintenance ou la réparation du réservoir 20. Ainsi, un procédé de maintenance ou de réparation du réservoir 20 consiste à désolidariser la couronne de jonction 32 de la première et/ou deuxième partie. Selon un mode opératoire, la couronne de jonction 32 est désolidarisée des première et deuxième parties et le procédé de maintenance ou de réparation comprend une étape de remontage du réservoir en reliant les première et deuxième parties avec une nouvelle couronne de jonction 32'.

## Revendications

1. Réservoir (20) comprenant au moins des première et deuxième parties reliées entre elles de manière à obtenir un réservoir fermé délimitant des zones intérieure et extérieure, chacune desdites première et deuxième parties présentant une extrémité, **caractérisé en ce que** le réservoir (20) comprend une couronne de jonction (32) intercalée entre les première et deuxième parties et reliée à l'extrémité de la première partie par une première soudure périphérique (34) obtenue par un procédé de soudage par friction et à l'extrémité de la deuxième partie par une deuxième soudure périphérique (36) obtenue par un procédé de soudage par friction, la couronne de jonction (32) comprenant au moins un premier tronçon cylindrique (38) emmanché dans l'extrémité de la première partie, au moins un premier épaulement (42) positionné approximativement dans un plan transversal, attenant au premier tronçon cylindrique (38) et en saillie vers la zone extérieure du réservoir (20) par rapport au premier tronçon cylindrique (38), ainsi qu'au moins une première âme transversale (44) en forme d'anneau comportant un bord extérieur relié au premier tronçon cylindrique (38) et un bord intérieur orienté vers la zone intérieure du réservoir (20), ladite première âme transversale étant positionnée approximativement dans le même plan transversal que le premier épaulement (42), la première soudure périphérique (34) étant positionnée au niveau d'un plan de jonction situé entre le premier épaulement (42) et l'extrémité de la première partie et les reliant et **en ce que** la couronne de jonction (32) comprend un deuxième tronçon cylindrique (40) présentant une extrémité libre (40.1) destinée à être positionné dans le prolongement de l'extrémité (30) de la deuxième partie.

2. Réservoir selon la revendication 1, **caractérisé en ce que** chaque épaulement (42) présente une hauteur égale à l'épaisseur de l'extrémité de la partie emmanchée sur le tronçon cylindrique (38) attenant à l'épaulement (42).

3. Réservoir selon la revendication 1 ou 2, **caractérisé en ce que** l'extrémité libre (40.1) est reliée bout à bout à la deuxième partie par la deuxième soudure périphérique (36).

4. Réservoir selon la revendication précédente, **caractérisé en ce que** la couronne de jonction (32) comprend un tronçon tubulaire interne (46) coaxial au premier tronçon cylindrique (38) et relié au bord intérieur de la première âme transversale (44).

5. Réservoir selon la revendication 3 ou 4, **caractérisé en ce que** le deuxième tronçon cylindrique (40) présente une longueur supérieure à celle du premier tronçon cylindrique (38).

6. Réservoir selon la revendication précédente, **caractérisé en ce que** le deuxième tronçon cylindrique (40) présente une épaisseur qui augmente de l'extrémité libre (40.1) jusqu'à la première âme transversale (44).

7. Réservoir selon la revendication 1 ou 2, **caractérisé en ce que** la couronne de jonction (32) comprend un deuxième tronçon cylindrique (38') emmanché dans l'extrémité de la deuxième partie, un deuxième épaulement (42') positionné approximativement dans un plan transversal, attenant au deuxième tronçon cylindrique (38') et en saillie vers la zone extérieure du réservoir (20) par rapport au deuxième tronçon cylindrique (38') ainsi qu'une deuxième âme transversale (44') en forme d'anneau comportant un bord extérieur relié au deuxième tronçon cylindrique (38') et un bord intérieur orienté vers la zone intérieure du réservoir (20), ladite deuxième âme transversale étant positionnée approximativement dans le même plan transversal que le deuxième épaulement (42'), la deuxième soudure périphérique (36) étant positionnée au niveau d'un plan de jonction situé entre le deuxième épaulement (42') et l'extrémité de la deuxième partie et les reliant.

8. Réservoir selon la revendication précédente, **caractérisé en ce que** la couronne de jonction (32) comprend un tronçon tubulaire interne (46) coaxial aux premier et deuxième tronçons cylindriques (38, 38') et reliant les bords intérieurs des première et deuxième âmes transversales (44, 44').

9. Procédé de fabrication d'un réservoir selon l'une des revendications précédentes, ledit réservoir (20) comprenant au moins des première et deuxième parties reliées entre elles de manière à obtenir un réservoir fermé délimitant des zones intérieure et extérieure, chacune desdites première et deuxième parties présentant une extrémité, **caractérisé en ce que** le procédé de fabrication comprend une première étape de positionnement d'une couronne de jonction (32) par rapport à l'extrémité de la deuxième partie, ladite couronne de jonction (32) comprenant au moins un premier tronçon cylindrique (38) configuré pour être emmanché dans l'extrémité de la première partie, au moins un premier épaulement (42) positionné approximativement dans un plan transversal, attenant au premier tronçon cylindrique (38) et en saillie vers la zone extérieure du réservoir (20) par rapport au premier tronçon cylindrique (38) ainsi qu'au moins une première âme transversale (44) en forme d'anneau comportant un bord extérieur relié au premier tronçon cylindrique (38) et un bord intérieur orienté vers la zone intérieure du réservoir (20), ladite première âme transversale étant positionnée approximativement dans le même plan transversal que le premier épaulement (42), **en ce que** le procédé comprend une première étape de soudage par friction pour relier la couronne de jonction (32) et la deuxième partie, une deuxième étape de positionnement du premier tronçon cylindrique (38) emmanché dans l'extrémité de la première partie jusqu'à ce que ladite extrémité de la première partie vienne en butée contre le premier épaulement (42) ainsi qu'une deuxième étape de soudage par friction pour relier la couronne de jonction (32) et la première partie, la couronne de jonction (32) comprenant un deuxième tronçon cylindrique (40) présentant une extrémité libre (40.1) destinée à être positionné dans le prolongement de l'extrémité (30) de la deuxième partie et à être reliée à cette deuxième partie par la deuxième soudure périphérique (36).

10. Procédé selon la revendication précédente, **caractérisé en ce que** la première étape de positionnement consiste à positionner bout à bout l'extrémité libre (40.1) du deuxième tronçon cylindrique (40) et l'extrémité (30) de la deuxième partie et **en ce que** le procédé comprend une étape de mise en place d'une contre-plaque (48) pour assurer la reprise des efforts générés lors de la première étape de soudage par friction ainsi qu'une étape de retrait de la contre-plaque (48) après la réalisation de la première étape de soudage par friction et avant la deuxième étape de positionnement.

11. Procédé selon la revendication 9, **caractérisé en ce que** la couronne de jonction (32) comprend un deuxième tronçon cylindrique (38') configuré pour être emmanché dans l'extrémité de la deuxième partie, un deuxième épaulement (42') positionné approximativement dans un plan transversal, attenant au deuxième tronçon cylindrique (38') et en saillie vers la zone extérieure du réservoir (20) par rapport au deuxième tronçon cylindrique (38') ainsi qu'une deuxième âme transversale (44') en forme d'anneau comportant un bord extérieur relié au deuxième tronçon cylindrique (38') et un bord intérieur orienté vers la zone intérieure du réservoir (20), ladite deuxième âme transversale étant positionnée approximativement dans le même plan transversal que le deuxième épaulement (42') et **en ce que** la première étape de positionnement consiste à emmancher l'extrémité de la deuxième partie sur le deuxième tronçon cylindrique (38') jusqu'à ce que ladite extrémité de la deuxième partie vienne en butée contre le deuxième épaulement (42').

12. Procédé de maintenance ou de réparation d'un réservoir (20) selon l'une des revendications 1 à 8, **caractérisé en ce qu'**il comprend une étape de désolidarisation de la couronne de jonction (32) de la première et/ou deuxième partie.

13. Procédé de maintenance ou de réparation selon la revendication précédente, **caractérisé en ce que** la couronne de jonction (32) est désolidarisée des première et deuxième parties et **en ce que** le procédé de maintenance ou de réparation comprend une étape de remontage du réservoir (20) en reliant les première et deuxième parties avec une nouvelle couronne de jonction (32').

## Patentansprüche

1. Behälter (20) mit wenigstens einem ersten und einem zweiten Teil, die so miteinander verbunden sind, dass ein geschlossener Behälter entsteht, der einen inneren und einen äußeren Bereich abgrenzt, wobei jeder der ersten und zweiten Teile ein Ende aufweist, **dadurch gekennzeichnet, dass** der Behälter (20) einen Verbindungskranz (32) aufweist, der zwischen dem ersten und dem zweiten Teil angeordnet ist und mit dem Ende des ersten Teils durch eine erste Umfangsschweißnaht (34), die durch ein Reibschweißverfahren erstellt ist, und mit dem Ende des zweiten Teils durch eine zweite Umfangsschweißnaht (36), die durch ein Reibschweißverfahren erstellt ist, verbunden ist, wobei der Verbindungskranz (32) wenigstens einen ersten zylindrischen Abschnitt (38) aufweist, der in das Ende des ersten Teils eingebracht ist, wenigstens eine erste Schulter (42), die ungefähr in einer Querebene angeordnet ist, die an den ersten zylindrischen Abschnitt (38) angrenzt und die in Richtung des Außenbereichs des Behälters (20) in Bezug auf den ersten zylindrischen Abschnitt (38) vorsteht, sowie wenigstens einen ersten Quersteg (44) in Form eines Rings aufweist, der einen mit dem ersten zylindrischen Abschnitt (38) verbundenen Außenrand und einen zum Innenbereich des Behälters (20) weisenden Innenrand aufweist, wobei der erste Quersteg ungefähr in der gleichen Querebene wie die erste Schulter (42) angeordnet ist und wobei die erste Umfangsschweißnaht (34) im Bereich einer Verbindungsebene angeordnet ist, die zwischen der ersten Schulter (42) und dem Ende des ersten Teils liegt und diese verbindet, und dass der Verbindungskranz (32) einen zweiten zylindrischen Abschnitt (40) mit einem freien Ende (40.1) aufweist, das dazu bestimmt ist, in Verlängerung des Endes (30) des zweiten Teils angeordnet zu werden.

2. Behälter nach Anspruch 1, **dadurch gekennzeichnet, dass** jede Schulter (42) eine Höhe aufweist, die gleich der Dicke des Endes des Teils ist, der auf den an die Schulter (42) angrenzenden zylindrischen Abschnitt (38) aufgebracht ist.

3. Behälter nach Anspruch 1 oder 2, **dadurch gekennzeichnet, dass** das freie Ende (40.1) durch die zweite Umfangsschweißnaht (36) mit dem zweiten Teil Stumpf an Stumpf verbunden ist.

4. Behälter nach dem vorhergehenden Anspruch, **dadurch gekennzeichnet, dass** der Verbindungskranz (32) einen inneren rohrförmigen Abschnitt (46) aufweist, der zum ersten zylindrischen Abschnitt (38) koaxial ist und mit dem Innenrand des ersten Querstegs (44) verbunden ist.

5. Behälter nach Anspruch 3 oder 4, **dadurch gekennzeichnet, dass** der zweite zylindrische Abschnitt (40) eine größere Länge als der erste zylindrische Abschnitt (38) aufweist.

6. Behälter nach dem vorhergehenden Anspruch, **dadurch gekennzeichnet, dass** der zweite zylindrische Abschnitt (40) eine Dicke aufweist, die vom freien Ende (40.1) bis zum ersten Quersteg (44) hin zunimmt.

7. Behälter nach Anspruch 1 oder 2, **dadurch gekennzeichnet, dass** der Verbindungskranz (32) einen zweiten zylindrischen Abschnitt (38') aufweist, der in das Ende des zweiten Teils eingebracht ist, eine zweite Schulter (42'), die ungefähr in einer Querebene angeordnet ist, die an den zweiten zylindrischen Abschnitt (38') angrenzt und in Bezug auf den zweiten zylindrischen Abschnitt (38') zum Außenbereich des Behälters (20) hin vorspringt, sowie einen zweiten Quersteg (44') in Form eines Rings aufweist, der einen mit dem zweiten zylindrischen Abschnitt (38') verbundenen Außenrand und einen zum Innenbereich des Behälters (20) weisenden Innenrand aufweist, wobei der zweite Quersteg ungefähr in der gleichen Querebene wie die zweite Schulter (42') angeordnet ist und wobei die zweite Umfangsnaht (36) im Bereich einer Verbindungsebene angeordnet ist, die zwischen der zweiten Schulter (42') und dem Ende des zweiten Teils liegt und diese verbindet.

8. Behälter nach dem vorhergehenden Anspruch, **dadurch gekennzeichnet, dass** der Verbindungskranz (32) einen inneren rohrförmigen Abschnitt (46) umfasst, der koaxial zum ersten und zweiten zylindrischen Abschnitt (38, 38') ist und die Innenränder des ersten und zweiten Querstegs (44, 44') verbindet.

9. Verfahren zur Herstellung eines Behälters nach einem der vorhergehenden Ansprüche, wobei der Behälter (20) wenigstens einen ersten und einen zweiten Teil aufweist, die so miteinander verbunden sind, dass ein geschlossener Behälter entsteht, der einen inneren und einen äußeren Bereich abgrenzt, wobei jeder der ersten und zweiten Teile ein Ende aufweist, **dadurch gekennzeichnet, dass** das Herstellungsverfahren einen ersten Schritt des Positionierens eines Verbindungskranzes (32) in Bezug auf das Ende des zweiten Teils umfasst, wobei der Verbindungskranz (32) wenigstens einen ersten zylindrischen Abschnitt (38) aufweist, der so eingerichtet ist, dass er in das Ende des ersten Teils eingebracht werden kann, wenigstens eine erste Schulter (42), die ungefähr in einer Querebene angeordnet ist, die an den ersten zylindrischen Abschnitt (38) angrenzt und die in Richtung des Außenbereichs des Behälters (20) in Bezug auf den ersten zylindrischen Abschnitt (38) vorsteht, sowie wenigstens einen ersten Quersteg (44) in Form eines Rings aufweist, der einen mit dem ersten zylindrischen Abschnitt (38) verbundenen Außenrand und einen zum Innenbereich des Behälters (20) weisenden Innenrand aufweist, wobei der erste Quersteg ungefähr in der gleichen Querebene wie die erste Schulter (42) angeordnet ist, dass das Verfahren einen ersten Reibschweißschritt umfasst, um den Verbindungskranz (32) und den zweiten Teil zu verbinden, einen zweiten Schritt des Positionierens des ersten zylindrischen Abschnitts (38), der in das Ende des ersten Teils eingebracht wird, bis das Ende des ersten Teils an der ersten Schulter (42) anliegt, sowie einen zweiten Reibschweißschritt, um den Verbindungskranz (32) und den ersten Teil zu verbinden, wobei der Verbindungskranz (32) einen zweiten zylindrischen Abschnitt (40) mit einem freien Ende (40.1) aufweist, das dazu bestimmt ist, in Verlängerung des Endes (30) des zweiten Teils angeordnet zu werden und mit diesem zweiten Teil durch die zweite Umfangsschweißnaht (36) verbunden zu werden.

10. Verfahren nach dem vorhergehenden Anspruch, **dadurch gekennzeichnet, dass** der erste Schritt des Positionierens darin besteht, das freie Ende (40.1) des zweiten zylindrischen Abschnitts (40) und das Ende (30) des zweiten Teils Stumpf an Stumpf anzuordnen, und dass das Verfahren einen Schritt des Ansetzens einer Gegenplatte (48) umfasst, um die Aufnahme der beim ersten Reibschweißschritt erzeugten Kräfte zu gewährleisten, sowie einen Schritt des Entfernens der Gegenplatte (48) nach der Durchführung des ersten Reibschweißschritts und vor dem zweiten Schritt des Positionierens.

11. Verfahren nach Anspruch 9, **dadurch gekennzeichnet, dass** der Verbindungskranz (32) einen zweiten zylindrischen Abschnitt (38') aufweist, der so gestaltet ist, dass er in das Ende des zweiten Teils eingebracht werden kann, eine zweite Schulter (42'), die ungefähr in einer Querebene angeordnet ist, die an den zweiten zylindrischen Abschnitt (38') angrenzt und die in Richtung des äußeren Bereichs des Behälters (20) in Bezug auf den zweiten zylindrischen Abschnitt (38') vorsteht, sowie einen zweiten Quersteg (44') in Form eines Rings aufweist, der einen mit dem zweiten zylindrischen Abschnitt (38') verbundenen Außenrand und einen in Richtung des inneren Bereichs des Behälters (20) weisenden Innenrand aufweist, wobei der zweite Quersteg ungefähr in gleichen Querebene wie die zweite Schulter (42') angeordnet ist, und dass der erste Schritt des Positionierens darin besteht, das Ende des zweiten Teils auf den zweiten zylindrischen Abschnitt (38') aufzubringen, bis das Ende des zweiten Teils an die zweite Schulter (42') anstößt.

12. Verfahren zur Wartung oder Reparatur eines Behälters (20) nach einem der Ansprüche 1 bis 8, **dadurch gekennzeichnet, dass** es einen Schritt zum Lösen des Verbindungskranzes (32) vom ersten und/oder zweiten Teil umfasst.

13. Verfahren zur Wartung oder Reparatur nach dem vorhergehenden Anspruch, **dadurch gekennzeichnet, dass** der Verbindungskranz (32) von dem ersten und dem zweiten Teil getrennt wird und dass das Verfahren zur Wartung oder Reparatur einen Schritt umfasst, bei dem der Behälter (20) wieder zusammengesetzt wird, indem der erste und der zweite Teil mit einem neuen Verbindungskranz (32') verbunden werden.

## Claims

1. Tank (20) comprising at least first and second portions which are connected to each other in order to obtain a closed tank which delimits the inner and outer zones, each of the first and second portions having an end, **characterized in that** the tank (20) comprises a connection ring (32) which is interposed between the first and second portions and which is connected to the end of the first portion by a first circumferential weld seam (34) which is obtained by means of a friction welding method and to the end of the second portion by a second circumferential weld seam (36) which is obtained by means of a friction welding method, the connection ring (32) comprising at least a first cylindrical portion (32) which is fitted in the end of the first portion, at least a first shoulder (42) which is positioned approximately in a transverse plane adjacent to the first cylindrical portion (38) and which protrudes toward the outer zone of the tank (20) relative to the first cylindrical portion (38) and at least a first transverse web (44) in the form of a ring which comprises an outer edge which is connected to the first cylindrical portion (38) and an inner edge which is orientated toward the inner zone of the tank (20), the first transverse web being positioned approximately in the same transverse plane as the first shoulder (42), the first circumferential weld seam (34) being positioned in the region of a connection plane located between the first shoulder (42) and the end of the first portion and connecting them and **in that** the connection ring (32) comprises a second cylindrical portion (40) having a free end (40.1) intended to be positioned in the extension of the end (30) of the second portion.

2. Tank as claimed in claim 1, wherein each shoulder (42) has a height which is equal to the thickness of the end of the portion which is fitted to the cylindrical portion (38) adjacent to the shoulder (42).

3. Tank as claimed in claim 1 or 2, wherein the free end (40.1) is connected end-to-end to the second portion by means of the second circumferential weld seam (36).

4. Tank as claimed in the preceding claim, wherein the connection ring (32) comprises an internal tubular portion (46) which is coaxial with the first cylindrical portion (38) and which is connected to the inner edge of the first transverse web (44).

5. Tank as claimed in claim 3 or 4, wherein the second cylindrical portion (40) has a length which is greater than that of the first cylindrical portion (38).

6. Tank as claimed in the preceding claim, wherein the second cylindrical portion (40) has a thickness which increases from the free end (40.1) up to the first transverse web (44).

7. Tank as claimed in claim 1 or 2, wherein the connection ring (32) comprises a second cylindrical portion (38') which is fitted in the end of the second portion, a second shoulder (42') which is positioned approximately in a transverse plane and which is adjacent to the second cylindrical portion (38') and which protrudes toward the outer zone of the tank (20) relative to the second cylindrical portion (38') and a second transverse web (44') in the form of a ring which comprises an outer edge which is connected to the second cylindrical portion (38') and an inner edge which is orientated toward the inner zone of the tank (20), the second transverse web being positioned approximately in the same transverse plane as the second shoulder (42'), the second circumferential weld seam (36') being positioned in the region of a connection plane located between the second shoulder (42') and the end of the second portion and connecting them.

8. Tank as claimed in the preceding claim, wherein the connection ring (32) comprises an internal tubular portion (46) which is coaxial with the first and second cylindrical portions (38, 38') and which connects the inner edges of the first and second transverse webs (44, 44').

9. Production method for a tank as claimed in one of the preceding claims, said tank (20) comprising at least first and second portions which are connected to each other in order to obtain a closed tank which delimits inner and outer zones, each of the first and second portions having an end, wherein the production method comprises a first step of positioning a connection ring (32) relative to the end of the second portion, the connection ring (32) comprising at least a first cylindrical portion (38) which is configured to be fitted in the end of the first portion, at least a first shoulder (42) which is positioned approximately in a transverse plane and which is adjacent to the first cylindrical portion (38) and which protrudes toward the outer zone of the tank (20) relative to the first cylindrical portion (38) and at least a first transverse web (44) in the form of a ring which comprises an outer edge which is connected to the first cylindrical portion (38) and an inner edge which is orientated toward the inner zone of the tank (20), the first transverse web being positioned approximately in the same transverse plane as the first shoulder (42), wherein the method comprises a first step of friction welding in order to connect the connection ring (32) and the second portion, a second step of positioning the first cylindrical portion (38) which is fitted in the end of the first portion until the end of the first portion moves into abutment against the first shoulder (42) and a second step of friction welding in order to connect the connection ring (32) and the first portion, the connection ring (32) comprises a second cylindrical portion (40) having a free end (40.1) intended to be positioned in the extension of the end (30) of the second portion and to be connected to said second portion by the second circumferential weld seam (36).

10. Method as claimed in the preceding claim, wherein the first positioning step involves positioning end-to-end the free end (40.1) of the second cylindrical portion (40) and the end (30) of the second portion, and wherein the method comprises a step of positioning a counter-plate (48) in order to ensure that the forces generated during the first friction welding step are absorbed and a step of removing the counter-plate (48) after the first friction welding step has been carried out and before the second positioning step.

11. Method as claimed in claim 9, wherein the connection ring (32) comprises a second cylindrical portion (38') which is configured to be fitted in the end of the second portion, a second shoulder (42') which is positioned approximately in a transverse plane and which is adjacent to the second cylindrical portion (38') and which protrudes toward the outer zone of the tank (20) relative to the second cylindrical portion (38') and a second transverse web (44') in the form of a ring which comprises an outer edge which is connected to the second cylindrical portion (38') and an inner edge which is orientated toward the inner zone of the tank (20), the second transverse web being positioned approximately in the same transverse plane as the second shoulder (42'), and wherein the first positioning step involves fitting the end of the second portion to the second cylindrical portion (38') until the end of the second portion moves into abutment against the second shoulder (42').

12. Method for maintenance or repair of a tank (20) as claimed in one of claims 1 to 8, wherein it comprises a step of disengaging the connection ring (32) from the first and/or second portion.

13. Method for maintenance or repair as claimed in the preceding claim, wherein the connection ring (32) is disengaged from the first and second portions and wherein the method for maintenance or repair comprises a step of reassembly of the tank (20), connecting the first and second portions to a new connection ring (32').
